# EUROPEAN PATENT SPECIFICATION

(11) **EP 4 369 296 B1**
(45) Date of publication and mention of the grant of the patent: **17.12.2025**
(21) Application number: 22857628.6
(22) Date of filing: 08.08.2022
(51) Int. Cl.: G06T 7/10, G06T 7/194, H04N 5/272, G06T 11/60

(54) **IMAGE PROCESSING METHOD AND APPARATUS, AND DEVICE AND STORAGE MEDIUM**
BILDVERARBEITUNGSVERFAHREN UND -VORRICHTUNG SOWIE VORRICHTUNG UND SPEICHERMEDIUM
PROCÉDÉ ET APPAREIL DE TRAITEMENT D'IMAGE, DISPOSITIF, ET SUPPORT DE STOCKAGE

(30) Priority: 18.08.2021 CN 202110948815
(43) Date of publication of application: 15.05.2024
(73) Proprietor: Beijing Zitiao Network Technology Co., Ltd., Beijing 100190 (CN)
(72) Inventor: LYU, Shaohui, Beijing 100086 (CN)
(74) Representative: Marks & Clerk LLP
(86) International application number: PCT/CN2022/110798
(87) International publication number: WO 2023/020316

(56) References cited:
- CN-A- 108 460 770
- CN-A- 108 596 913
- CN-A- 108 596 913
- CN-A- 110 751 655
- CN-A- 111 179 285
- US-B2- 8 879 835
- HSIEH CHANG-LIN ET AL: "Automatic trimap generation for digital image matting", 2013 ASIA-PACIFIC SIGNAL AND INFORMATION PROCESSING ASSOCIATION ANNUAL SUMMIT AND CONFERENCE, APSIPA, 29 October 2013 (2013-10-29), pages 1 - 5, XP032549799, DOI: 10.1109/APSIPA.2013.6694178
- ZHANG YUNKE ET AL: "A Late Fusion CNN for Digital Matting", 2019 IEEE/CVF CONFERENCE ON COMPUTER VISION AND PATTERN RECOGNITION (CVPR), IEEE, 15 June 2019 (2019-06-15), pages 7461 - 7470, XP033687381, DOI: 10.1109/CVPR.2019.00765

## Description

### CROSS-REFERENCE TO RELATED APPLICATION

The present application claims priority of the Chinese Patent Application No. 202110948815.2, filed on August 18, 2021 and titled "IMAGE PROCESSING METHOD, APPARATUS, DEVICE AND STORAGE MEDIUM".

### TECHNICAL FIELD

The present disclosure relates to the field of data processing, and in particular to an image processing method, an apparatus, a device and a storage medium.

### BACKGROUND

Image matting is one of the common operations in image processing. Specifically, it is to accurately separate a part of an original image from the original image into a separate image layer, which serves as an important basis for subsequent image processing.

At present, the image matting modes can be divided into a manual image matting mode, an automatic image matting mode and a semi-automatic image matting mode based on the degree of intelligence, and the image matting user can only select one of the image matting modes to perform an image matting processing on the original image, and cannot simultaneously use multiple image matting modes to perform an image matting processing on the same original image.

In practical application, different image matting modes have their own advantages. For example, the automatic image matting mode has a higher degree of intelligence and can save user's image matting time, while the semi-automatic image matting mode and the manual image matting mode have higher image matting precision and can improve image matting quality.

Therefore, how to realize the function of performing an image matting processing on the same original image by using multiple image matting modes simultaneously is an urgent technical problem to be solved at present.
Reference D1 (Automatic Trimap Generation for Digital Image Matting) discloses automatic Trimap generation for digital image matting.
Reference D2 (CN 108596913 A) discloses an image matting method and apparatus.
Reference D3 (A Late Fusion CNN for Digital Matting) discloses a Late Fusion CNN for Digital Matting.

### SUMMARY

In order to solve the above technical problem or at least partially solve the above technical problem, the present disclosure provides an image processing method, an apparatus, a device and a storage medium. By drawing image matting results in different image matting modes on the same canvas, the function of performing an image matting processing on the same image by simultaneously using multiple image matting modes is realized. It is an object of the present invention to provide an image processing method, an apparatus, a device and a storage medium. The object is achieved by the features of the respective independent claims. Further embodiments are defined in the respective dependent claims.

Compared with the prior art, the technical solutions provided by the embodiments of the present disclosure have at least the following advantages.

Embodiments of the present disclosure provide an image processing method as disclosed in claim 1. In the embodiments of the present disclosure, by drawing image matting results of the same image to be processed in different image matting modes on the same canvas, the function of performing an image matting processing on the same image by simultaneously using multiple image matting modes is realized.

### BRIEF DESCRIPTION OF DRAWINGS

The accompanying drawings, which are hereby incorporated in and constitute a part of the present description, illustrate embodiments of the present disclosure, and together with the description, serve to explain the principles of the embodiments of the present disclosure.

To describe the technical solutions in the embodiments of the present disclosure or in the prior art more clearly, the accompanying drawings required in the description of the embodiments or the prior art will be described briefly below. Apparently, other accompanying drawings can also be derived from these drawings by those ordinarily skilled in the art without creative efforts.
FIG. 1 is a flowchart of an image processing method provided by embodiments of the present disclosure;
FIG. 2 is a schematic diagram of drawing an image matting result on a preset canvas provided by embodiments of the present disclosure;
FIG. 3 is a schematic diagram of an image matting result in a semi-automatic image matting mode in the prior art;
FIG. 4 is a schematic diagram of an image matting result in a semi-automatic image matting mode provided by embodiments of the present disclosure;
FIG. 5 is a schematic structural diagram of an image processing apparatus provided by embodiments of the present disclosure; and
FIG. 6 is a schematic structural diagram of an image processing device provided by embodiments of the present disclosure.

### DETAILED DESCRIPTION

To provide a clearer understanding of the objectives, features, and advantages of the embodiments of the present disclosure, the solutions in the embodiments of the present disclosure will be further described below. It should be noted that the embodiments in the present disclosure and features in the embodiments may be combined with one another without conflict.

Many specific details are described below to help fully understand the embodiments of the present disclosure. However, the embodiments of the present disclosure may also be implemented in other manners different from those described herein. Apparently, the described embodiments in the specification are merely some rather than all of the embodiments of the present disclosure.

At present, the image matting modes can be divided into a manual image matting mode, an automatic image matting mode and a semi-automatic image matting mode based on degree of intelligence. The manual image matting mode means that an image matting result is generated only based on stroke region drawn manually by a user, in which the degree of intelligence is low, but the image matting precision is high, and the user can manually select the image matting region of interest. The automatic image matting mode means that the image matting result is automatically generated based on an image matting model or image matting algorithm, etc., in which the degree of intelligence is high, but the image matting result may not meet user's needs. The semi-automatic image matting mode means that after the user draws the stroke region manually, the image matting result containing the stroke region drawn manually by the user is generated based on characteristic correlation between pixel points in the stroke region and pixel points in a surrounding region.

In practical application, since different image matting modes have their own advantages, in order to improve image matting efficiency and also ensure image matting quality, multiple image matting modes can be used to perform an image matting processing on the same image simultaneously, so as to obtain an image matting result that meets user's needs.

Therefore, embodiments of the present disclosure provide an image processing method. Firstly, in a first image matting mode, when an image matting operation triggered for an image to be processed is received, an image matting result corresponding to the image matting operation is obtained as a first image matting result. Then, the first image matting result is drawn on a preset canvas; a second image matting result is drawn on the preset canvas, and the second image matting result is an image matting result for the image to be processed in a second image matting mode. Furthermore, based on the first image matting result and the second image matting result on the preset canvas, an image matting effect map of the image to be processed is determined. In the embodiments of the present disclosure, by drawing image matting results of the same image to be processed in different image matting modes on the same canvas, the function of performing an image matting processing on the same image by simultaneously using multiple image matting modes is realized.

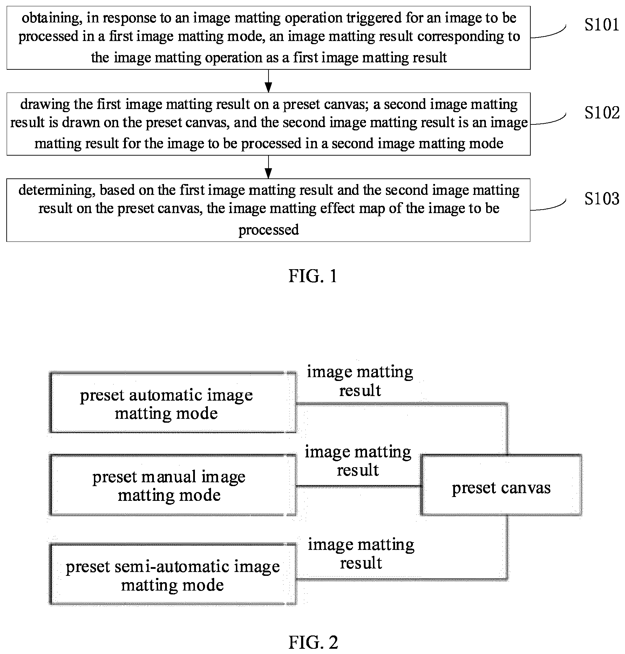

Based on this, embodiments of the present disclosure provide an image processing method. Referring to FIG. 1, which is a flowchart of an image processing method provided by embodiments of the present disclosure, the method includes:
S101: obtaining, in response to an image matting operation triggered for an image to be processed in a first image matting mode, an image matting result corresponding to the image matting operation as a first image matting result.

In the embodiment of the present disclosure, the first image matting mode is any selected from a preset automatic image matting mode, a preset manual image matting mode and a preset semi-automatic image matting mode.

In practical application, in the first image matting mode, if the image matting operation triggered for the image to be processed is received, the image matting result corresponding to the image matting operation is obtained as the first image matting result.

In an alternative implementation, if the first image matting mode is the preset automatic image matting mode, the image matting operation triggered for the image to be processed may include operations, such as clicking or touching a preset automatic image matting button, etc. Accordingly, after receiving the operation of clicking or touching the preset automatic image matting button for the image to be processed, an automatic image matting processing is performed on the image to be processed to obtain the first image matting result. The embodiments of the present disclosure do not limit the way by which the automatic image matting processing is performed on the image to be processed.

In another alternative implementation, if the first image matting mode is the preset manual image matting mode, the image matting operation triggered for the image to be processed may be an operation of drawing a stroke on the image to be processed by a user. Accordingly, after receiving the operation of drawing the stroke on the image to be processed, an image matting processing is performed based on the stroke region of the stroke to obtain the first image matting result. The region corresponding to the first image matting result coincides with the stroke region of the stroke.

In another alternative implementation, if the first image matting mode is the preset semi-automatic image matting mode, the image matting operation triggered for the image to be processed may also be an operation of drawing a stroke on the image to be processed by a user. Accordingly, after receiving the operation of drawing the stroke on the image to be processed, based on the characteristic correlation between pixel points in the stroke region of the stroke and pixel points in surrounding region, an image matting result containing the stroke region is obtained as the first image matting result. The semi-automatic image matting algorithm adopted by the preset semi-automatic image matting mode in the embodiment of the present disclosure is not limited here.

S102: drawing the first image matting result on a preset canvas; a second image matting result is drawn on the preset canvas, and the second image matting result is an image matting result for the image to be processed in a second image matting mode.

In the embodiment of the present disclosure, after obtaining the first image matting result corresponding to the image matting operation, the first image matting result is drawn on the preset canvas.

In practical application, image matting results of the same image to be processed in different image matting modes are all drawn on the same canvas, that is, drawn on the preset canvas in the embodiments of the present disclosure, thus ensuring that the function of performing an image matting processing on the same image to be processed by using different image matting modes can be realized, and satisfying the diverse image matting needs of users.

In practical application, assuming that the preset canvas contains an image that is drawn based on the image matting result for the image to be processed in the second image matting mode, the first image matting result in the first image matting mode is drawn on the preset canvas after obtaining the first image matting result for the image to be processed in the first image matting mode.

In practical application, if the first image matting result in the first image matting mode has an overlapping region with a drawn image on the preset canvas, in order to ensure the drawing effect, transparency values of pixel points drawn in the overlapping region on the preset canvas can be set. Specifically, the transparency value of a pixel point with larger transparency value among pixel points with the same position coordinates in the drawn image on the preset canvas and the first image matting result in the first image matting mode is determined as a transparency value of the pixel point with the same position coordinates on the preset canvas, so as to avoid transparency of the overlapping region being lower than that of other regions, which affects the display effect of the image matting result.

Assuming that a first pixel point in the first image matting result in the first image matting mode has the same position coordinates as a second pixel point in the drawn image on the preset canvas, the larger transparency value among the transparency values of the first pixel point and the second pixel point is determined as the transparency value of the pixel point with the same position coordinates on the preset canvas. Then, the first image matting result is drawn on the preset canvas based on the transparency value of the pixel point on the preset canvas.

As shown in FIG. 2, which is a schematic diagram drawing an image matting result on a preset canvas provided by embodiments of the present disclosure, the image matting results in the preset automatic image matting mode, the preset manual image matting mode and the preset semi-automatic image matting mode can all be output to the same preset canvas, thus ensuring that an image matting effect map of the image to be processed that is displayed based on the preset canvas is the image matting effect map that uses multiple matting modes simultaneously, and improving the use experience of image matting for users.

S103: determining, based on the first image matting result and the second image matting result on the preset canvas, the image matting effect map of the image to be processed.

In the embodiments of the present disclosure, after the image matting results for the same image to be processed in different image matting modes are drawn on the preset canvas, the image matting effect map of the image to be processed is displayed based on the image drawn on the preset canvas. Since the image drawn on the preset canvas contains the image matting results of the same image to be processed in various image matting modes, the embodiments of the present disclosure can realize the function of performing an image matting processing on the same image by using multiple image matting modes simultaneously.

In the image processing method provided by the embodiment of the present disclosure, firstly, in a first image matting mode, when an image matting operation triggered for an image to be processed is received, an image matting result corresponding to the image matting operation is obtained as a first image matting result. Then, the first image matting result is drawn on a preset canvas; a second image matting result is drawn on the preset canvas, and the second image matting result is an image matting result for the image to be processed in a second image matting mode. Furthermore, based on the first image matting result and the second image matting result on the preset canvas, an image matting effect map of the image to be processed is determined. In the embodiments of the present disclosure, by drawing image matting results of the same image to be processed in different image matting modes on the same canvas, the function of performing an image matting processing on the same image by simultaneously using multiple image matting modes is realized.

Based on the above method embodiment, embodiments of the present disclosure provide a method of acquiring an image matting result in a preset semi-automatic image matting mode. Specifically, in the preset semi-automatic image matting mode, the determining of the image matting result corresponding to current image matting operation is not only related to the stroke region currently drawn by the user, but also related to a previous image matting result corresponding to the current image matting operation.

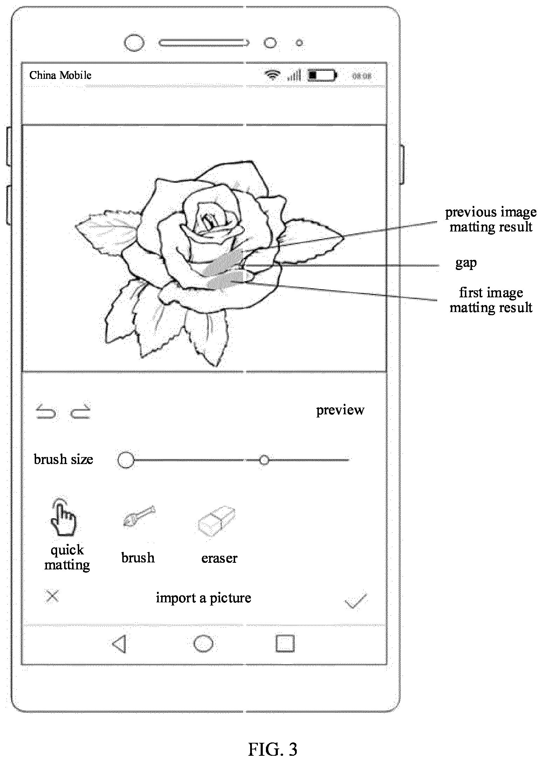

As shown in FIG. 3, which is a schematic diagram of an image matting result in a semi-automatic image matting mode in the prior art, the semi-automatic image matting mode corresponds to the "quick image matting" button in FIG. 3. There is a gap between the previous image matting result corresponding to the current image matting operation and the first image matting result corresponding to the current image matting operation, as shown in FIG. 3. Usually, the gap in FIG. 3 is not drawn due to the limitation of user's operation fineness, but in fact, the gap in FIG. 3 is an image matting region of interest of the image matting user. Therefore, in the semi-automatic image matting mode, the gap may be automatically identified as being contained in the image matting result corresponding to the current image matting operation.

In order to realize the above function, the embodiment of the present disclosure at least needs to store a previous image matting result corresponding to the current image matting operation in the preset semi-automatic image matting mode. Upon receiving an image matting operation triggered for the image to be processed in the preset semi-automatic image matting mode, a stroke region corresponding to the image matting operation is acquired, and a previous image matting result corresponding to the image matting operation is acquired. Then, the stroke region, the previous image matting result and the image to be processed are used as input parameters of a preset semi-automatic image matting algorithm, and after processing according to the preset semi-automatic image matting algorithm, an image matting algorithm result map corresponding to the image matting operation is obtained.

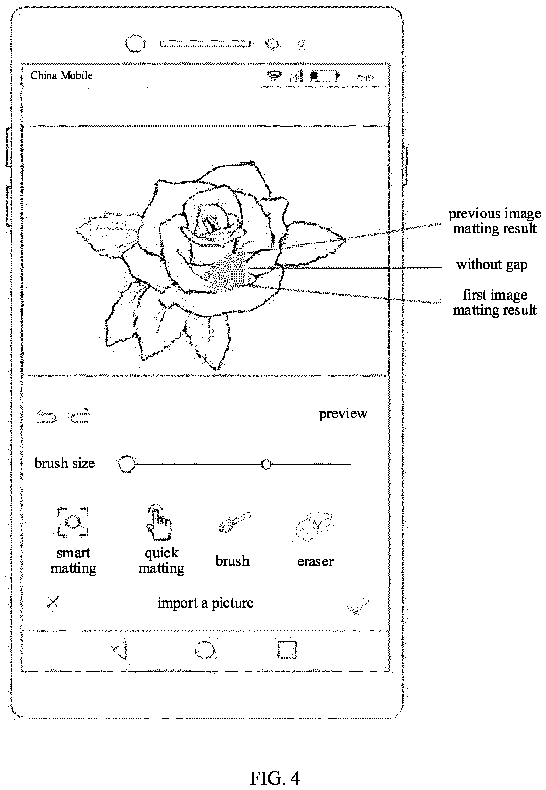

It is worth noting that the embodiments of the present disclosure do not limit the implementation of the preset semi-automatic image matting algorithm. The preset semi-automatic image matting algorithm is used to determine the image matting algorithm result map corresponding to the image matting operation based on the stroke region and the previous image matting result corresponding to the current image matting operation, and the image to be processed. The preset semi-automatic image matting algorithm may identify the gap shown in FIG. 3 as being contained in the image matting result corresponding to the image matting operation. As shown in FIG. 4, the previous image matting result may be an image matting result generated by a user by clicking the "smart image matting" button to enter the automatic image matting mode, or may be an image matting result generated by the user by clicking the "quick image matting" button to enter the semi-automatic image matting mode. After the user clicks the "quick image matting" button again to enter the preset semi-automatic image matting mode, the stroke region currently drawn by the user is acquired, and the image matting algorithm result map is determined based on the previous image matting result, the stroke region and the image to be processed by using the preset semi-automatic image matting algorithm. As shown in FIG. 4, which is a schematic diagram of the image matting result in the semi-automatic image matting mode obtained after the processing of the embodiment of the present disclosure, it can be seen that the gap shown in FIG. 3 can be automatically identified as being contained in the image matting result corresponding to the current image matting operation in the semi-automatic image matting mode.

In an alternative implementation, in the semi-automatic image matting mode, a preset array is used to store the image matting result corresponding to the image matting operation in each step according to an execution order of the image matting operations, so as to determine the image matting result of the current image matting operation in the semi-automatic image matting mode.

In practical application, the semi-automatic image matting mode has the function of undo operation. As shown in FIG. 4, the undo operation corresponds to a flag of "Undo Forward". The embodiments of the present disclosure can realize the undo operation based on the image matting result corresponding to each image matting operation that stored in the preset array according to the execution order. Specifically, when an undo operation for any image matting operation is received, the image matting result corresponding to this image matting operation in the preset array may be marked with an undo flag, so as to indicate that the undo operation is performed on the image matting result.

In practical application, in the semi-automatic image matting mode, when a new stroke operation is received, the image matting result with the undo flag in the preset array is deleted, and an image matting result corresponding to the new stroke operation is stored in the preset array, so as to ensure to undo to a valid image matting result instead of the image matting result with the undo flag when the undo operation is performed again.

In addition, in practical application, in the semi-automatic image matting mode, the image matting algorithm result map output by the preset semi-automatic image matting algorithm is a small map, usually with a size smaller than 512*512, so as to save computing resources of the system. However, the image matting result drawn on the preset canvas is a large map, usually with a size of 2048*1080. Therefore, before drawing the image matting algorithm result map on the preset canvas, the small map is firstly amplified to obtain a corresponding large map. Therefore, in the semi-automatic image matting mode, the embodiment of the present disclosure can save computing resources of the system while ensuring user's experience.

Specifically, in order to reduce the jaggedness of the image matting algorithm result map (i.e., the small map), the embodiments of the present disclosure firstly perform a Gaussian blur processing on the image matting algorithm result map corresponding to the image matting operation to obtain a Gaussian blur result map. Then, after amplifying the Gaussian blur result map according to a preset multiple, a binarization processing is performed to obtain the image matting result corresponding to the image matting operation. After the binarization processing, the edges and corners of the image matting result are made clear, thus improving the quality of the image matting effect map of the image to be processed.

In an alternative implementation, an operator (m, n) may be used to perform the Gaussian blur processing on the image matting algorithm result map for 1 to 3 times, where m or n may be any value in the range of 3 to 5.

In another alternative implementation, any value in the range of 0.6 to 0.8 may be used as a threshold of the binarization processing, so as to obtain the image matting effect map with clear edges and corners.

In the image processing method provided by the embodiments of the present disclosure, the image matting algorithm result map output by the preset semi-automatic image matting algorithm in the semi-automatic image matting mode is a small map, and the small graph is amplified just before being drawn on the preset canvas, thereby saving computing resources of the system while ensuring user's experience.

In addition, the embodiment of the present disclosure can further reduce the jaggedness of the image matting algorithm result map by performing the Gaussian blur processing on the image matting algorithm result map, thereby improving the quality of the image matting effect map of the image to be processed.

In addition, the embodiments of the present disclosure can further obtain the image matting effect map with clear edges and corners by the binarization processing, thereby further improving the quality of the image matting effect map of the image to be processed.

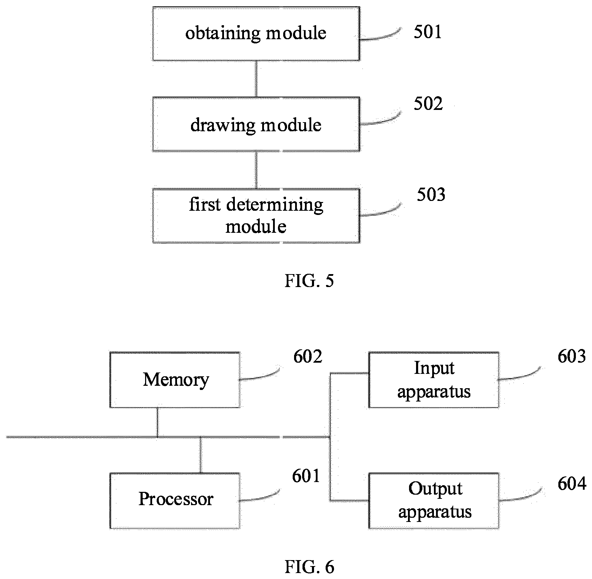

Based on the above method embodiments, the present disclosure further provides an image processing apparatus. Referring to FIG. 5, which is a schematic structural diagram of an image processing apparatus provided by embodiments of the present disclosure, the apparatus includes:
an obtaining module 501, configured to obtain, in response to an image matting operation triggered for an image to be processed in a first image matting mode, an image matting result corresponding to the image matting operation as a first image matting result;
a drawing module 502, configured to draw the first image matting result on a preset canvas; a second image matting result is drawn on the preset canvas, and the second image matting result is an image matting result for the image to be processed in a second image matting mode;
a first determining module 503, configured to determine, based on the first image matting result and the second image matting result on the preset canvas, an image matting effect map of the image to be processed.

Each of the first image matting mode and the second image matting mode is one selected from a preset automatic image matting mode, a preset manual image matting mode and a preset semi-automatic image matting mode, and the first image matting mode and the second image matting mode are different image matting modes.

In an alternative implementation, the first image matting mode is a preset semi-automatic image matting mode, and the obtaining module includes:
a first acquiring sub-module, configured to acquire, in response to an image matting operation triggered for the image to be processed in the preset semi-automatic image matting mode, a stroke region corresponding to the image matting operation, and acquire a previous image matting result corresponding to the image matting operation;
a processing sub-module, configured to input the stroke region, the previous image matting result and the image to be processed into a preset semi-automatic image matting algorithm, and output an image matting algorithm result map corresponding to the image matting operation after being processed by the preset semi-automatic image matting algorithm;
an obtaining sub-module, configured to obtain, based on the image matting algorithm result map corresponding to the image matting operation, the image matting result corresponding to the image matting operation.

In an alternative implementation, the previous image matting result corresponding to the image matting operation is stored in a preset array, and the preset array is used to store an image matting result corresponding to each image matting operation in the preset semi-automatic image matting mode according to an execution order; and the apparatus further includes:
a deleting module, configured to delete an image matting result with an undo flag in the preset array; the undo flag is marked for the image matting result when an image matting operation corresponding to the image matting result is undone.

In an alternative implementation, the obtaining sub-module includes:
a Gaussian sub-module, configured to perform a Gaussian blur processing on the image matting algorithm result map corresponding to the image matting operation to obtain a Gaussian blur result map;
a binarization sub-module, configured to perform, after amplifying the Gaussian blur result map according to a preset multiple, a binarization processing to obtain the image matting result corresponding to the image matting operation.

The apparatus further includes:
a second determining module, configured to determine a transparency value of a pixel point with larger transparency value among pixel points with same position coordinates in the first image matting result and a drawn image on the preset canvas as a transparency value of a pixel point with the same position coordinates on the preset canvas; the drawn image includes the second image matting result;
correspondingly, the drawing module is specifically configured to:
draw, based on the transparency value of the pixel point on the preset canvas, the first image matting result on the preset canvas.

In the image processing apparatus provided by the embodiments of the present disclosure, firstly, in a first image matting mode, when an image matting operation triggered for an image to be processed is received, an image matting result corresponding to the image matting operation is obtained as a first image matting result. Then, the first image matting result is drawn on a preset canvas; a second image matting result is drawn on the preset canvas, and the second image matting result is an image matting result for the image to be processed in a second image matting mode. Furthermore, based on the first image matting result and the second image matting result on the preset canvas, an image matting effect map of the image to be processed is determined. In the embodiments of the present disclosure, by drawing image matting results of the same image to be processed in different image matting modes on the same canvas, the function of performing an image matting processing on the same image by simultaneously using multiple image matting modes is realized.

In addition to the above method and apparatus, embodiments of the present disclosure further provide a computer-readable storage medium, instructions are stored on the computer-readable storage medium, and the instructions, upon being executed by a terminal device, cause the terminal device to implement the image processing method described in the embodiments of the present disclosure.

Embodiments of the present disclosure further provides a computer program product, including computer program/instructions, the computer program/instructions, when executed by a processor, implement the image processing method described in the embodiments of the present disclosure.

In addition, embodiments of the present disclosure further provide an image processing device, as shown in FIG. 6, which includes:
a processor 601, a memory 602, an input apparatus 603 and an output apparatus 604. The number of the processor 601 in the image processing device may be one or more, and one processor is taken as an example in FIG. 6. In some embodiments of the present disclosure, the processor 601, the memory 602, the input apparatus 603 and the output apparatus 604 may be connected through a bus or other means, and the connection through the bus is taken as an example in FIG. 6.

The memory 602 may be configured to store software programs and modules, and the processor 601 executes various functional applications and data processing of the image processing device by running the software programs and modules stored in the memory 602. The memory 602 may mainly include a program storage region and a data storage region, and the program storage region may store an operating system, application programs required by at least one function, etc. In addition, the memory 602 may include high-speed random-access memory, and may also include non-volatile memory, such as at least one magnetic disk memory, flash memory, or other volatile solid-state memory. The input apparatus 603 may be configured to receive inputted digital or character information and generate signal input related to user settings and function control of the image processing device.

Specifically, in the present embodiment, the processor 601 may follow the following instructions to load executable files corresponding to the processes of one or more application programs into the memory 602, and the processor 601 may run the application programs stored in the memory 602 to realize various functions of the above-mentioned image processing device.

It should be noted that in the present disclosure, relational terms, such as "first" and "second", etc., are merely used to distinguish one entity or operation from another entity or operation, and do not necessarily require or imply that there is any such factual relationship or order between these entities or operations. Moreover, the terms "including", "comprising" or any other variation thereof are intended to cover non-exclusive inclusion, so that a process, method, article or device that includes a series of elements includes not only these elements, but also other elements that are not explicitly listed or elements that are inherent to such process, method, article or device. Without further restrictions, an element defined by the phrase "including a/an ..." does not exclude the existence of other identical elements in the process, method, article or device that includes the element.

What is described above is only the specific embodiments of the present disclosure, so that those skilled in the art can understand or realize the present disclosure. Many modifications to these embodiments will be obvious to those skilled in the art, and the general principles defined herein may be implemented in other embodiments without departing from the spirit or scope of the present disclosure. Therefore, the present disclosure is not limited to the embodiments described herein, but to be accorded the widest scope that is consistent with the principles and novel features disclosed herein.

Embodiments of the present disclosure further provides a computer program product, including computer program/instructions, characterized in that the computer program/instructions, when executed by a processor, implement the image processing method described in the embodiments of the present disclosure.

In addition, embodiments of the present disclosure further provide an image processing device, as shown in FIG. 6, which may include:
a processor 601, a memory 602, an input apparatus 603 and an output apparatus 604. The number of the processor 601 in the image processing device may be one or more, and one processor is taken as an example in FIG. 6. In some embodiments of the present disclosure, the processor 601, the memory 602, the input apparatus 603 and the output apparatus 604 may be connected through a bus or other means, and the connection through the bus is taken as an example in FIG. 6.

The memory 602 may be configured to store software programs and modules, and the processor 601 executes various functional applications and data processing of the image processing device by running the software programs and modules stored in the memory 602. The memory 602 may mainly include a program storage region and a data storage region, and the program storage region may store an operating system, application programs required by at least one function, etc. In addition, the memory 602 may include high-speed random-access memory, and may also include non-volatile memory, such as at least one magnetic disk memory, flash memory, or other volatile solid-state memory. The input apparatus 603 may be configured to receive inputted digital or character information and generate signal input related to user settings and function control of the image processing device.

Specifically, in the present embodiment, the processor 601 may follow the following instructions to load executable files corresponding to the processes of one or more application programs into the memory 602, and the processor 601 may run the application programs stored in the memory 602 to realize various functions of the above-mentioned image processing device.

It should be noted that in the present disclosure, relational terms, such as "first" and "second", etc., are merely used to distinguish one entity or operation from another entity or operation, and do not necessarily require or imply that there is any such factual relationship or order between these entities or operations. Moreover, the terms "including", "comprising" or any other variation thereof are intended to cover non-exclusive inclusion, so that a process, method, article or device that includes a series of elements includes not only these elements, but also other elements that are not explicitly listed or elements that are inherent to such process, method, article or device. Without further restrictions, an element defined by the phrase "including a/an ..." does not exclude the existence of other identical elements in the process, method, article or device that includes the element.

What is described above is only the specific embodiments of the present disclosure, so that those skilled in the art can understand or realize the present disclosure. The invention is defined by the appended claims.

## Claims

1. A computer- implemented image processing method, comprising the following steps:
obtaining, in response to an image matting operation triggered for an image to be processed in a first image matting mode, an image matting result corresponding to the image matting operation as a first image matting result (S101);
drawing the first image matting result on a preset canvas; wherein a second image matting result is drawn on the preset canvas, and the second image matting result is an image matting result for the image to be processed in a second image matting mode (S102);
determining, based on the first image matting result and the second image matting result on the preset canvas, an image matting effect map of the image to be processed (S103);
wherein each of the first image matting mode and the second image matting mode is one selected from a preset automatic image matting mode, a preset manual image matting mode and a preset semi-automatic image matting mode, and the first image matting mode and the second image matting mode are different image matting modes;
**characterized in that** before drawing the first image matting result on the preset canvas, the method further comprises:
determining a transparency value of a pixel point with larger transparency value among pixel points with same position coordinates in the first image matting result and a drawn image on the preset canvas as a transparency value of a pixel point with the same position coordinates on the preset canvas; wherein the drawn image comprises the second image matting result;
correspondingly, drawing the first image matting result on the preset canvas comprises:
drawing, based on the transparency value of the pixel point on the preset canvas, the first image matting result on the preset canvas.

2. The method according to claim 1, **characterized in that** the first image matting mode is the preset semi-automatic image matting mode, and obtaining, in response to the image matting operation triggered for the image to be processed in the first image matting mode, the image matting result corresponding to the image matting operation as the first image matting result, comprises:
acquiring, in response to an image matting operation triggered for the image to be processed in the preset semi-automatic image matting mode, a stroke region corresponding to the image matting operation, and acquiring a previous image matting result corresponding to the image matting operation;
acquiring, based on the stroke region, the previous image matting result and the image to be processed, and according to a preset semi-automatic image matting algorithm, an image matting algorithm result map corresponding to the image matting operation;
obtaining, based on the image matting algorithm result map, an image matting result corresponding to the image matting operation as the first image matting result.

3. The method according to claim 2, **characterized in that** the previous image matting result corresponding to the image matting operation is stored in a preset array, and the preset array is used to store an image matting result corresponding to each image matting operation in the preset semi-automatic image matting mode according to an execution order;
before acquiring the previous image matting result corresponding to the image matting operation, the method further comprises:
deleting an image matting result with an undo flag in the preset array; wherein the undo flag is marked for the image matting result when an image matting operation corresponding to the image matting result is undone.

4. The method according to claim 2, **characterized in that** obtaining, based on the image matting algorithm result map, the image matting result corresponding to the image matting operation as the first image matting result, comprises:
performing a Gaussian blur processing on the image matting algorithm result map to obtain a Gaussian blur result map;
performing, after amplifying the Gaussian blur result map according to a preset multiple, a binarization processing to obtain the image matting result corresponding to the image matting operation as the first image matting result.

5. An image processing apparatus, **characterized in that** the apparatus comprises:
an obtaining module (501), configured to obtain, in response to an image matting operation triggered for an image to be processed in a first image matting mode, an image matting result corresponding to the image matting operation as a first image matting result;
a drawing module (502), configured to draw the first image matting result on a preset canvas; wherein a second image matting result is drawn on the preset canvas, and the second image matting result is an image matting result for the image to be processed in a second image matting mode;
a first determining module (503), configured to determine, based on the first image matting result and the second image matting result on the preset canvas, an image matting effect map of the image to be processed;
wherein each of the first image matting mode and the second image matting mode is one selected from a preset automatic image matting mode, a preset manual image matting mode and a preset semi-automatic image matting mode, and the first image matting mode and the second image matting mode are different image matting modes;
**characterized in that** the apparatus further comprises:
a second determining module, configured to determine a transparency value of a pixel point with larger transparency value among pixel points with same position coordinates in the first image matting result and a drawn image on the preset canvas as a transparency value of a pixel point with the same position coordinates on the preset canvas; wherein the drawn image comprises the second image matting result;
correspondingly, the drawing module (502) is configured to:
draw, based on the transparency value of the pixel point on the preset canvas, the first image matting result on the preset canvas.

6. A computer-readable storage medium, **characterized in that** instructions are stored on the computer-readable storage medium, and the instructions, upon being executed by a terminal device, cause the terminal device to implement the method according to any one of claims 1-4.

7. A device, **characterized by** comprising: a memory (602), a processor (601), and computer program stored on the memory (602) and executable on the processor (601), wherein the processor (601), upon executing the computer program, implements the method according to any one of claims 1-4.

8. A computer program product, **characterized in that** the computer program product comprises computer program or instructions, and the computer program or instructions, when executed by a processor, implement the method according to any one of claims 1-4.

## Patentansprüche

1. Computerimplementiertes Bildverarbeitungsverfahren, das die folgenden Schritte umfasst:
Erhalten, als Reaktion auf eine Bildmattierungsoperation, die für ein zu verarbeitendes Bild in einem ersten Bildmattierungsmodus ausgelöst wird, eines Bildmattierungsergebnisses, das der Bildmattierungsoperation als ein erstes Bildmattierungsergebnis entspricht (S101);
Zeichnen des ersten Bildmattierungsergebnisses auf einer voreingestellten Zeichenfläche; wobei ein zweites Bildmattierungsergebnis auf der voreingestellten Zeichenfläche gezeichnet wird und das zweite Bildmattierungsergebnis ein Bildmattierungsergebnis für das in einem zweiten Bildmattierungsmodus (S102) zu verarbeitende Bild ist;
Bestimmen, basierend auf dem ersten Bildmattierungsergebnis und dem zweiten Bildmattierungsergebnis auf der voreingestellten Zeichenfläche, einer Bildmattierungseffektkarte des zu verarbeitenden Bildes (S103);
wobei der erste Bildmattierungsmodus und der zweite Bildmattierungsmodus jeweils einer ausgewählt aus einem voreingestellten automatischen Bildmattierungsmodus, einem voreingestellten manuellen Bildmattierungsmodus und einem voreingestellten halbautomatischen Bildmattierungsmodus ist, und der erste und der zweite Bildmattierungsmodus unterschiedliche Bildmattierungsmodi sind;
**dadurch gekennzeichnet, dass** das Verfahren vor dem Zeichnen des ersten Bildmattierungsergebnisses auf der voreingestellten Zeichenfläche weiter Folgendes umfasst:
Bestimmen eines Transparenzwerts eines Pixelpunkts mit höherem Transparenzwert aus Pixelpunkten mit gleichen Positionskoordinaten in dem ersten Bildmattierungsergebnis und einem auf der voreingestellten Zeichenfläche gezeichneten Bild als ein Transparenzwert eines Pixelpunkts mit gleichen Positionskoordinaten auf der voreingestellten Zeichenfläche; wobei das gezeichnete Bild das zweite Bildmattierungsergebnis umfasst;
wobei dementsprechend das Zeichnen des ersten Bildmattierungsergebnisses auf der voreingestellten Zeichenfläche Folgendes umfasst:
Zeichnen, basierend auf dem Transparenzwert des Pixelpunkts auf der voreingestellten Zeichenfläche des ersten Bildmattierungsergebnisses auf der voreingestellten Zeichenfläche.

2. Verfahren nach Anspruch 1, **dadurch gekennzeichnet, dass** der erste Bildmattierungsmodus der voreingestellte halbautomatische Bildmattierungsmodus ist und das Erhalten, als Reaktion auf die für das zu verarbeitende Bild in dem ersten Bildmattierungsmodus ausgelöste Bildmattierungsoperation, des Bildmattierungsergebnisses, das der Bildmattierungsoperation entspricht, als das erste Bildmattierungsergebnis Folgendes umfasst:
Erheben, als Reaktion auf eine Bildmattierungsoperation, die für das zu verarbeitende Bild in dem voreingestellten halbautomatischen Bildmattierungsmodus ausgelöst wird, eines Strichbereichs, der der Bildmattierungsoperation entspricht, und Erheben eines vorherigen Bildmattierungsergebnisses, das der Bildmattierungsoperation entspricht;
Erheben, basierend auf dem Strichbereich, des vorherigen Bildmattierungsergebnisses und des zu verarbeitenden Bildes, und gemäß einer voreingestellten halbautomatischen Bildmattierungsalgorithmus-Ergebniskarte, die der Bildmattierungsoperation entspricht;
Erhalten, basierend auf der Bildmattierungsalgorithmus-Ergebniskarte eines Bildmattierungsergebnisses, das der Bildmattierungsoperation entspricht, als das erste Bildmattierungsergebnis.

3. Verfahren nach Anspruch 2, **dadurch gekennzeichnet, dass** das vorherige Bildmattierungsergebnis, das der Bildmattierungsoperation entspricht, in einem voreingestellten Array gespeichert wird, und dass das voreingestellte Array dazu verwendet wird, ein Bildmattierungsergebnis zu speichern, das jeder Bildmattierungsoperation in dem voreingestellten halbautomatischen Bildmattierungsmodus gemäß einer Ausführungsreihenfolge entspricht;
wobei das Verfahren weiter vor dem Erheben des vorherigen Bildmattierungsergebnisses, das der Bildmattierungsoperation entspricht, Folgendes umfasst:
Löschen eines Bildmattierungsergebnisses mit einem Rückgängig-Flag in dem voreingestellten Array; wobei das Rückgängig-Flag für das Bildmattierungsergebnis gesetzt wird, wenn eine Bildmattierungsoperation, die dem Bildmattierungsergebnis entspricht, rückgängig gemacht wird.

4. Verfahren nach Anspruch 2, **dadurch gekennzeichnet, dass** bei dem Erhalten basierend auf der Bildmattierungsalgorithmus-Ergebniskarte des Bildmattierungsergebnisses, das der Bildmattierungsoperation entspricht, als das erste Bildmattierungs-Ergebnis Folgendes umfasst:
Durchführen einer Weichzeichnungsverarbeitung auf der Bildmattierungsalgorithmus-Ergebniskarte, um eine weichgezeichnete Ergebniskarte zu erhalten;
Durchführen, nach Verstärken weichgezeichneten Ergebniskarte gemäß einem voreingestellten Vielfachen, einer Binarisierungsverarbeitung, um das Bildmattierungsergebnis zu erhalten, das der Bildmattierungsoperation als das erste Bildmattierungsergebnis entspricht.

5. Bildverarbeitungseinrichtung, **dadurch gekennzeichnet, dass** die Einrichtung Folgendes umfasst:
ein Erhaltungsmodul (501), das dazu konfiguriert ist, als Reaktion auf eine Bildmattierungsoperation, die für ein zu verarbeitendes Bild in einem ersten Bildmattierungsmodus ausgelöst wird, eines Bildmattierungsergebnisses, das der Bildmattierungsoperation entspricht, als ein erstes Bildmattierungsergebnis;
ein Zeichenmodul (502), das dazu konfiguriert ist, das erste Bildmattierungsergebnis auf einer voreingestellten Zeichenfläche zu zeichnen; wobei ein zweites Bildmattierungsergebnis auf der voreingestellten Zeichenfläche gezeichnet wird, und das zweite Bildmattierungsergebnis ein Bildmattierungsergebnis für das Bild ist, das in einem zweiten Bildmattierungsmodus verarbeitet werden soll;
ein erstes Bestimmungsmodul (503), das dazu konfiguriert ist, basierend auf dem ersten Bildmattierungsergebnis und auf dem zweiten Bildmattierungsergebnis auf der voreingestellten Zeichenfläche eine Bildmattierungseffektkarte des zu verarbeitenden Bildes zu bestimmen;
wobei der erste Bildmattierungsmodus und der zweite Bildmattierungsmodus jeweils einer ausgewählt aus einem voreingestellten automatischen Bildmattierungsmodus, einem voreingestellten manuellen Bildmattierungsmodus und einem voreingestellten halbautomatischen Bildmattierungsmodus ist, und der erste und der zweite Bildmattierungsmodus unterschiedliche Bildmattierungsmodi sind; **dadurch gekennzeichnet, dass** die Einrichtung weiter Folgendes umfasst:
ein zweites Bestimmungsmodul, das dazu konfiguriert ist, einen Transparenzwert eines Pixelpunkts mit höherem Transparenzwert aus den Pixelpunkten mit gleichen Positionskoordinaten in dem ersten Bildmattierungsergebnis und einem auf der voreingestellten Zeichenfläche gezeichneten Bild als ein Transparenzwert eines Pixelpunkts mit den gleichen Positionskoordinaten auf der voreingestellten Zeichenfläche zu bestimmen; wobei das gezeichnete Bild das zweite Bildmattierungsergebnis umfasst;
wobei das Zeichenmodul (502) dementsprechend konfiguriert ist zum:
Zeichnen, basierend auf dem Transparenzwert des Pixelpunkts auf der voreingestellten Zeichenfläche des ersten Bildmattierungsergebnisses auf der voreingestellten Zeichenfläche.

6. Computerlesbares Speichermedium, **dadurch gekennzeichnet, dass** auf dem computerlesbaren Speichermedium Anweisungen gespeichert sind und die Anweisungen, wenn sie von einer Endgerätvorrichtung ausgeführt werden, die Endgerätvorrichtung dazu veranlassen, das Verfahren nach einem der Ansprüche 1-4 zu implementieren.

7. Vorrichtung, **dadurch gekennzeichnet, dass** sie Folgendes umfasst: einen Speicher (602), einen Prozessor (601) und ein in dem Speicher (602) gespeichertes und auf dem Prozessor (601) ausführbares Computerprogramm, wobei der Prozessor (601) beim Ausführen des Computerprogramms das Verfahren nach einem der Ansprüche 1-4 implementiert.

8. Computerprogrammprodukt, **dadurch gekennzeichnet, dass** das Computerprogrammprodukt ein Computerprogramm oder Anweisungen umfasst, und dass das Computerprogramm oder die Anweisungen, wenn sie von einem Prozessor ausgeführt werden, das Verfahren nach einem der Ansprüche 1-4 implementieren.

## Revendications

1. Procédé de traitement d'image mis en œuvre par ordinateur, comprenant les étapes suivantes :
l'obtention, en réponse à une opération de détourage d'image déclenchée pour qu'une image soit traitée dans un premier mode de détourage d'image, d'un résultat de détourage d'image correspondant à l'opération de détourage d'image en tant que premier résultat de détourage d'image (S101) ;
le dessin du premier résultat de détourage d'image sur un canevas prédéfini ; dans lequel un second résultat de détourage d'image est dessiné sur le canevas prédéfini, et le second résultat de détourage d'image est un résultat de détourage d'image pour l'image à traiter dans un second mode de détourage d'image (S102) ;
la détermination, sur la base du premier résultat de détourage d'image et du second résultat de détourage d'image sur le canevas prédéfini, d'une carte d'effet de détourage d'image de l'image à traiter (S103) ;
dans lequel chacun du premier mode de détourage d'image et du second mode de détourage d'image est sélectionné parmi un mode de détourage d'image automatique prédéfini, un mode de détourage d'image manuel prédéfini et un mode de détourage d'image semi-automatique prédéfini, et le premier mode de détourage d'image et le second mode de détourage d'image sont des modes de détourage d'image différents ;
**caractérisée en ce qu'**avant de dessiner le premier résultat de détourage d'image sur le canevas prédéfini, le procédé comprend en outre :
la détermination d'une valeur de transparence d'un point pixel présentant une valeur de transparence plus élevée parmi des points pixel présentant des coordonnées de position identiques dans le premier résultat de détourage d'image et une image dessinée sur le canevas prédéfini comme valeur de transparence d'un point pixel présentant les mêmes coordonnées de position sur le canevas prédéfini ; dans lequel l'image dessinée comprend le second résultat de détourage d'image ;
de manière correspondante, le dessin du premier résultat de détourage d'image sur le canevas prédéfini comprend :
le dessin, sur la base de la valeur de transparence du point de pixel sur le canevas prédéfini, du premier résultat de détourage d'image sur le canevas prédéfini.

2. Procédé selon la revendication 1, **caractérisé en ce que** le premier mode de détourage d'image est le mode de détourage d'image semi-automatique prédéfini, et **en ce que** l'obtention, en réponse à l'opération de détourage d'image déclenchée pour l'image à traiter dans le premier mode de détourage d'image, du résultat de détourage d'image correspondant à l'opération de détourage d'image en tant que premier résultat de détourage d'image, comprend :
l'acquisition, en réponse à une opération de détourage d'image déclenchée pour que l'image soit traitée dans le mode de détourage d'image semi-automatique prédéfini, d'une région de contour correspondant à l'opération de détourage d'image, et l'acquisition d'un résultat de détourage d'image précédent correspondant à l'opération de détourage d'image ;
l'acquisition, sur la base de la région de course, du résultat de détourage d'image précédent et de l'image à traiter, et selon un algorithme de détourage d'image semi-automatique prédéfini, une carte de résultat d'algorithme de détourage d'image correspondant à l'opération de détourage d'image ;
l'obtention, sur la base de la carte de résultat d'algorithme de détourage d'image, d'un résultat de détourage d'image correspondant à l'opération de détourage d'image en tant que premier résultat de détourage d'image.

3. Procédé selon la revendication 2, **caractérisé en ce que** le résultat de détourage d'image précédent correspondant à l'opération de détourage d'image est stocké dans un réseau prédéfini, et le réseau prédéfini est utilisé pour stocker un résultat de détourage d'image correspondant à chaque opération de détourage d'image dans le mode de détourage d'image semi-automatique prédéfini selon un ordre d'exécution ;
avant d'acquérir le résultat de détourage d'image précédent correspondant à l'opération de détourage d'image, le procédé comprend en outre :
la suppression d'un résultat de détourage d'image comportant un indicateur d'annulation dans le tableau prédéfini ; dans lequel l'indicateur d'annulation est marqué pour le résultat de détourage d'image lorsqu'une opération de détourage d'image correspondant à ce résultat est annulée.

4. Procédé selon la revendication 2, **caractérisé en ce que** l'obtention, sur la base de la carte de résultat d'algorithme de détourage d'image, du résultat de détourage d'image correspondant à l'opération de détourage d'image en tant que premier résultat de détourage d'image, comprend :
la réalisation d'un traitement de flou gaussien sur la carte de résultat d'algorithme de détourage d'image pour obtenir une carte de résultat de flou gaussien ;
après avoir amplifié la carte de résultat de flou gaussien selon un multiple prédéfini, la réalisation d'un traitement de binarisation pour obtenir un résultat de détourage d'image correspondant à l'opération de détourage d'image en tant que premier résultat de détourage d'image.

5. Appareil de traitement d'image, **caractérisé en ce que** l'appareil comprend :
un module d'obtention (501), configuré pour obtenir, en réponse à une opération de détourage d'image déclenchée pour qu'une image soit traitée dans un premier mode de détourage d'image, un résultat de détourage d'image correspondant à l'opération de détourage d'image en tant que premier résultat de détourage d'image ;
un module de dessin (502), configuré pour dessiner le premier résultat de détourage d'image sur un canevas prédéfini ; dans lequel un second résultat de détourage d'image est dessiné sur le canevas prédéfini, et le second résultat de détourage d'image est un résultat de détourage d'image pour l'image à traiter dans un second mode de détourage d'image ;
un premier module de détermination (503), configuré pour déterminer, sur la base du premier résultat de détourage d'image et du second résultat de détourage d'image sur le canevas prédéfini, une carte d'effet de détourage d'image de l'image à traiter;
dans lequel chacun du premier mode de détourage d'image et du second mode de détourage d'image est sélectionné parmi un mode de détourage d'image automatique prédéfini, un mode de détourage d'image manuel prédéfini et un mode de détourage d'image semi-automatique prédéfini, et le premier mode de détourage d'image et le second mode de détourage d'image sont des modes de détourage d'image différents ; **caractérisé en ce que** l'appareil comprend en outre :
un second module de détermination, configuré pour déterminer une valeur de transparence d'un point pixel présentant une valeur de transparence plus élevée parmi des points pixel présentant des coordonnées de position identiques dans le premier résultat de détourage d'image et une image dessinée sur le canevas prédéfini comme valeur de transparence d'un point pixel présentant les mêmes coordonnées de position sur le canevas prédéfini ; dans lequel l'image dessinée comprend le second résultat de détourage d'image ;
de manière correspondante, le module de dessin (502) est configuré pour :
dessiner, sur la base de la valeur de transparence du point de pixel sur le canevas prédéfini, le premier résultat de détourage d'image sur le canevas prédéfini.

6. Support de stockage lisible par ordinateur, **caractérisé en ce que** des instructions sont stockées sur le support de stockage lisible par ordinateur, et les instructions, lorsqu'elles sont exécutées par un dispositif terminal, amènent le dispositif terminal à mettre en œuvre le procédé selon l'une quelconque des revendications 1-4.

7. Dispositif, **caractérisé par** ce qu'il comprend : une mémoire (602), un processeur (601) et un programme informatique stocké sur la mémoire (602) et pouvant être exécuté sur le processeur (601), dans lequel le processeur (601), lors de l'exécution du programme informatique, met en œuvre le procédé selon l'une quelconque des revendications 1-4.

8. Produit de programme informatique, **caractérisé en ce que** le produit de programme informatique comprend un programme informatique ou des instructions, et le programme informatique ou les instructions, lorsqu'ils sont exécutés par un processeur, mettent en œuvre le procédé selon l'une quelconque des revendications 1-4.
